# EUROPEAN PATENT SPECIFICATION

(11) **EP 3 334 248 B1**
(45) Date of publication and mention of the grant of the patent: **04.12.2024**
(21) Application number: 16203564.6
(22) Date of filing: 12.12.2016
(51) Int. Cl.: H05B 6/12

(54) **INDUCTION COOKING HOB WITH COOLING SYSTEM**
INDUKTIONSKOCHFELD MIT KÜHLSYSTEM
TABLE DE CUISSON PAR INDUCTION AVEC SYSTÈME DE REFROIDISSEMENT

(43) Date of publication of application: 13.06.2018
(73) Proprietor: Electrolux Appliances Aktiebolag, 105 45 Stockholm (SE)
(72) Inventor: NEUKAMM, Alwin, 91541 Rothenburg ob der Tauber (DE); MALKOMES, Simon, 91541 Rothenburg ob der Tauber (DE); KLEIN, Gerhard, 91541 Rothenburg ob der Tauber (DE); LEYH, Björn, 91541 Rothenburg ob der Tauber (DE)
(74) Representative: Electrolux Group Patents

(56) References cited:
- EP-A2- 1 628 506
- EP-A2- 1 936 283
- EP-A2- 2 679 913
- JP-A- 2003 217 814
- US-A1- 2012 152 933

## Description

The present invention relates to an induction cooking hob with a cooling system. The induction cooking hob comprises one or more induction modules. In particular the induction module includes a circuitry, a cooling element and a cooling fan.

In a conventional induction cooking hob the outlet holes for an air stream are arranged at the front side of said induction cooking hob. Said air stream is provided for cooling purposes, in particular for cooling the circuitry. The air stream exiting the induction cooking hob through the outlet holes has a relative high temperature and reaches an area in front of said induction cooking hob. Usually, the user stands in front of the induction cooking hob and is exposed to the hot air stream. A protection shield is often attached in front of the induction cooking hob in order to avoid the hot air stream reaches the user.

EP-A-1628506 discloses an induction cooking hob comprising an induction module comprising a module casing and a fan and a cooling element arranged within an inner space of the module casing. EP-A-1628506 also discloses means for directing an air stream within the module casing and from the cooling element to a laterally arranged exhaust port.

JP-A-2003217814 discloses another induction cooking hob being provided with means for creating a flow of air towards and to induction coils and out of the induction cooking hob through a lateral exhaust port.

It is an object of the present invention to provide an induction cooking hob, which avoids that the air stream provided for cooling purposes reaches the user.

The object is achieved by the induction cooking hob according to claim 1.

According to the present invention an induction cooking hob with a cooling system is provided, wherein:
- the induction cooking hob comprises a casing and at least one induction module, and
- the casing includes at least one air guide arranged inside a front channel, so that an air stream from a or at least one cooling element is deflected and guided to at least one lateral outlet hole of a closest lateral wall.

The present invention allows that the air stream leaves the induction cooking hob through the lateral outlet holes and avoids that the hot air stream reaches the user standing in front of said induction cooking hob. A protection shield at the induction cooking hob is not required.

Furthermore, according to the present invention,
- the casing includes a bottom plate, a front wall, a rear wall and two lateral walls,
- the at least one lateral outlet hole is arranged in a front portion of the lateral wall,
- the induction module is arranged inside the casing, and/or
- the induction module includes a circuitry, a cooling element and at least one cooling fan.

Moreover, according to the present invention, each induction module is spaced from the front wall, so that the front channel is formed between the induction modules and the front wall.

Additionally, the induction cooking hob comprises two induction modules arranged side-by-side. A first air guide is arranged in front of the cooling element of the induction module on a first side, while a second air guide is arranged in front of the cooling element of the induction module on a second side, and wherein the first air guide deflects the air stream to the at least one lateral outlet hole of the lateral wall on the first side, while the second air guide deflects the air stream to the at least one lateral outlet hole of the lateral wall on the second side.

Further, the circuitry and the cooling element may be arranged side-by-side in a front portion of the induction module, wherein at least some components of the circuitry are arranged on the cooling element, and wherein preferably at least one rectifier and/or at least one power unit are arranged on said cooling element.

According to embodiments, the induction cooking hob can comprise one cooling element, at least one cooling element, two cooling elements or at least two cooling elements. The or each cooling element can be formed as a single-piece or by multiple pieces. A cooling element which is formed as a single-piece can provide a good cooling performance. On the other hand, a cooling element which is made from multiple pieces can be advantageous, as it can increase the flexibility for inserting the cooling element with respect to the degrees of freedom of the arrangement as well as the flexibility regarding the space requirement. In an embodiment, the induction cooking hob comprises two or more induction modules, whereas the cooling system comprises two or more cooling elements which are arranged within or adjacent to the two or more induction modules.

Moreover, the cooling fan may be arranged in a rear portion of the induction module and behind the cooling element.

In particular, the cooling element includes a structure that an air stream generated by the cooling fan penetrates or passes said cooling element and reaches the front channel.

Preferably, at least one of the lateral walls includes a plurality of lateral outlet holes arranged in the front portion of said lateral wall.

Further, the air guide may be formed as a vertical sheet element, wherein preferably said air guide is made of metal and/or plastics.

For example, the air guide is formed as a plane sheet element arranged diagonally inside the front channel and in front of the cooling element.

Moreover, the bottom plate may include at least one lower outlet hole arranged in an outer portion of the front channel, wherein said outer portion is beside the corresponding lateral wall, and wherein preferably a plurality of lower outlet holes is arranged in said outer portion of the front channel.

Additionally, the induction module may be spaced from the closest lateral wall, so that a lateral channel is formed between the induction module and the closest lateral wall. Since the induction module is spaced from the lateral outlet hole, it is not possible that the user touches the circuitry through said lateral outlet holes.

In particular, the bottom plate includes at least one lower outlet hole arranged in a front portion of the lateral channel, wherein preferably a plurality of lower outlet holes is arranged in said front portion of the lateral channel.

Further, the cooling element may include a plurality of cooling fins arranged plane-parallel to each other, wherein a plurality of elongated cooling channels is arranged between said cooling fins, and wherein said elongated cooling channels extend parallel to a connecting line between the cooling fan and the air guide, and wherein preferably the cooling fins extend vertically downwards, so that the elongated cooling channels are formed between the cooling fins and the bottom plate of the casing.

For example, the cooling fan is a radial cooling fan and blows the air stream from the rear to the front, wherein preferably the cooling fan sucks the air at the rear side of the induction cooking hob.

In this case, the induction module on the first side may be spaced from the lateral wall on the first side, while the induction module on the second side may be spaced from the lateral wall on the second side, so that a first and a second lateral channel are formed between the corresponding induction modules and lateral walls.

Additionally, at least one central induction module may be arranged between two lateral induction modules. In this case, the induction cooking hob comprises three or more induction modules arranged side-by-side.

Furthermore, the induction cooking hob comprises a panel, in particular a glass ceramic panel, covering an open top side of the casing.

Moreover, the induction cooking hob comprises at least one induction coil, in particular a plurality of induction coils, electrically connected to the corresponding circuitry.

At last, the at least one induction coil may be arranged between the at least one induction module and the panel.

Novel and inventive features of the present invention are set forth in the appended claims.

The present invention will be described in further detail with reference to the drawing, in which
- FIG 1: illustrates a schematic perspective view of an induction cooking hob according to a preferred embodiment of the present invention, and
- FIG 2: illustrates a schematic top view of the induction cooking hob according to the preferred embodiment of the present invention.

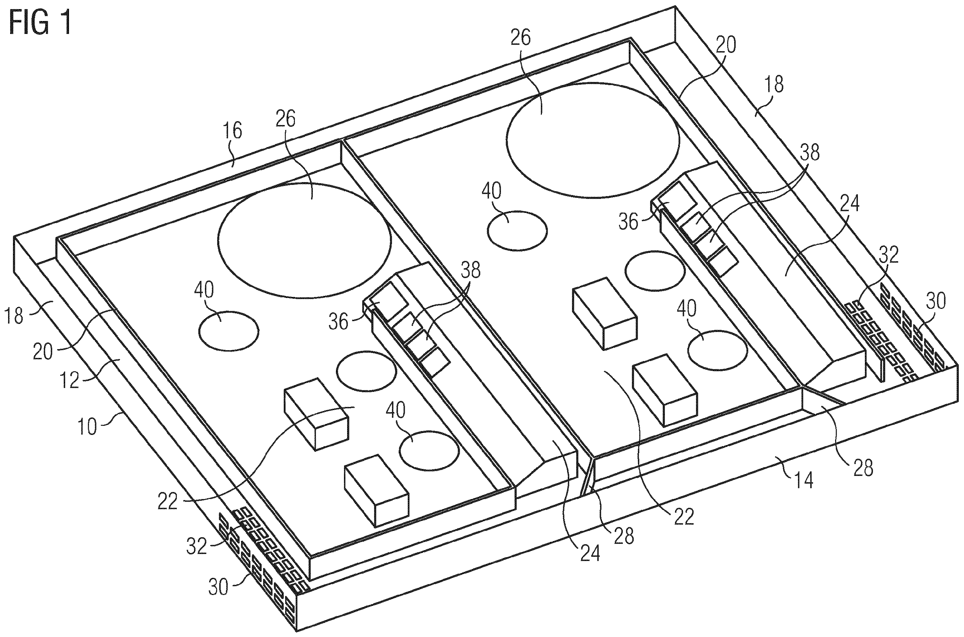

FIG 1 illustrates a schematic perspective view of an induction cooking hob according to a preferred embodiment of the present invention.

The induction cooking hob comprises a casing 10. Said casing 10 includes a bottom plate 12, a front wall 14, a rear wall 16 and two lateral walls 18. The terms "bottom", "front", "rear", "lateral" further prepositions relate to the built-in state of the induction cooking hob. The casing 10 includes an open top side covered by a panel, in particular by a glass ceramic panel. Said panel is not shown in FIG 1.

Further, the induction cooking hob comprises two induction modules 20. Said induction modules 20 are arranged side-by-side within the casing 10. The induction modules 20 are arranged close to the rear wall 16, but spaced from the front wall 14 and the corresponding lateral wall 18. Thus, a front channel is formed between the induction modules 20 and the front wall 14, while two lateral channels are formed between the induction modules 20 and the corresponding lateral wall 18.

Each induction module 20 includes a circuitry 22, one or at least one cooling element 24 and a cooling fan 26. Each cooling element 24 can be made from one piece or from several pieces.

In the embodiment, the induction cooking hob comprises two or at least two cooling elements 24. If one or each cooling element 24 is made from a single piece, the cooling performance is increased, as the heat conductance is improved. On the other hand, if a or each cooling element 24 is made from several or multiple pieces, the flexibility of arranging the cooling element is increased and the arrangement within the available space can be optimised.

The circuitry 22 and the cooling element 24 are arranged side-by-side in a front portion of the induction module 20, while the cooling fan 26 is arranged behind the cooling element 24. On the output side the circuitry 22 is electrically connected to one or more induction coils. The induction coils are arranged above the induction modules 20 and beneath the panel. The induction coils are not shown in FIG 1. The circuitry 22 is mechanically and thermally coupled to the cooling element 24, so that heat is conducted from the circuitry 22 to the cooling element 24. The cooling element 24 includes a plurality of cooling fins arranged plane-parallel to each other. A plurality of cooling channels is arranged between the cooling fins. In this example, the cooling fins extend vertically downwards, i.e. the open ends of said cooling fins form the bottom of the cooling element 24. The cooling elements 24 are elongated and extend from the cooling fan 26 to the front channel.

The circuitry 22 comprises a rectifier 36, one or more power units, filter coils 40 and further electric and/or electronic components. In this example, each power unit is formed by a pair of insulated-gate bipolar transistors (IGBT) 38. Alternatively, other power units may be used instead of the IGBT 38.

As shown in FIG 1, the rectifier 36 and four pairs of the insulated-gate bipolar transistors 38 are directly connected to the cooling element 24. However, a separation layer is usually arranged between the rectifier 36 and the insulated-gate bipolar transistors 38, respectively, on the one hand and the cooling element 24 on the other hand in order to prevent a direct contact between the components. In this example, the rectifier 36 and the four pairs of the insulated-gate bipolar transistors 38 are connected to the cooling element 24 by screws. The rectifier 36 and the insulated-gate bipolar transistors 38 require cooling. The rectifier 36 is provided for converting an input alternating current voltage into a pulsed direct current voltage. The pair of insulated-gate bipolar transistors 38 acts as inverted rectifier and converts said pulsed direct current voltage into an alternating voltage for a corresponding induction coil. Usually, the input alternating current voltage has a frequency between 50 Hz and 60 Hz. In contrast, the frequency of the alternating voltage for the induction coils is between about 10 kHz and 100 kHz.

The rectifier 36 is usually formed as a bridge rectifier circuit and formed by diodes. The rectifier 36 and the insulated-gate bipolar transistors 38 are so-called power switches. The total electric power is delivered to the rectifier 36 and insulated-gate bipolar transistors 38. The total electric power of each induction module 20 passes the rectifier 38. Each pair of insulated-gate bipolar transistors 38 is provided with a part of said total electric power. For example, up to about 50 % of the total electric power is delivered to one pair of insulated-gate bipolar transistors 38. Thus, the rectifier 36 and the insulated-gate bipolar transistors 38 generate a lot of heat.

In this example, the cooling element 24 is elongated, wherein the rectifier 36 and the insulated-gate bipolar transistors 38 are arranged in series along a longitudinal axis of said cooling element 24. The rectifier 36 and the insulated-gate bipolar transistors 38 are attached on a sloped cooling surface of the cooling element 24, wherein said sloped cooling surface forms a transition between a top surface and a lateral surface of the cooling element 24. The cooling fins extend along the longitudinal axis of the cooling element 24. An air stream 34 generated by the cooling fan 26 passes the cooling element 24 along its longitudinal axis. The air stream 34 passes successively the rectifier 36 and each of the insulated-gate bipolar transistors 38. The rectifier 36 or one insulated-gate bipolar transistor 38 may also use the sloped cooling surface beneath the neighboured insulated-gate bipolar transistors 38, which is advantageous, since the insulated-gate bipolar transistors 38 are usually stressed by different powers.

In this example, the cooling element 24 is formed as a single-piece part. Alternatively, the cooling element 24 may be multipart. The cooling element 24 formed as single-piece part allows an efficient heat transfer. The cooling fins provide an extended surface within the cooling element 24, which contributes to the efficient heat transfer. Further, the cooling element 24 is relatively flat. The elongated and flat cooling element 24 requires only little space within the casing 10 of the induction cooking hob.

Moreover, the casing 10 includes two air guides 28. The air guides 28 are formed as vertical sheet elements and arranged in the front channel. The air guides 28 are made of metal or plastics. Each air guide 28 corresponds with one of the induction modules 20. The air guides 28 are arranged diagonally respective to the cooling fins of the cooling element 24 and to the front channel. Each air guide 28 is arranged in front of the corresponding cooling element 24.

Furthermore, each lateral wall 18 of the casing 10 includes a plurality of lateral outlet holes 30. Said lateral outlet holes 30 are arranged in the front portions of the lateral walls 18. A plurality of lower outlet holes 32 is formed in the bottom plate 12 of the casing 10. Said lower outlet holes 32 are arranged in the front portions of the lateral channel between the induction module 20 and the adjacent lateral wall 18. The lower outlet holes 32 are arranged beneath and beside the lateral outlet holes 30.

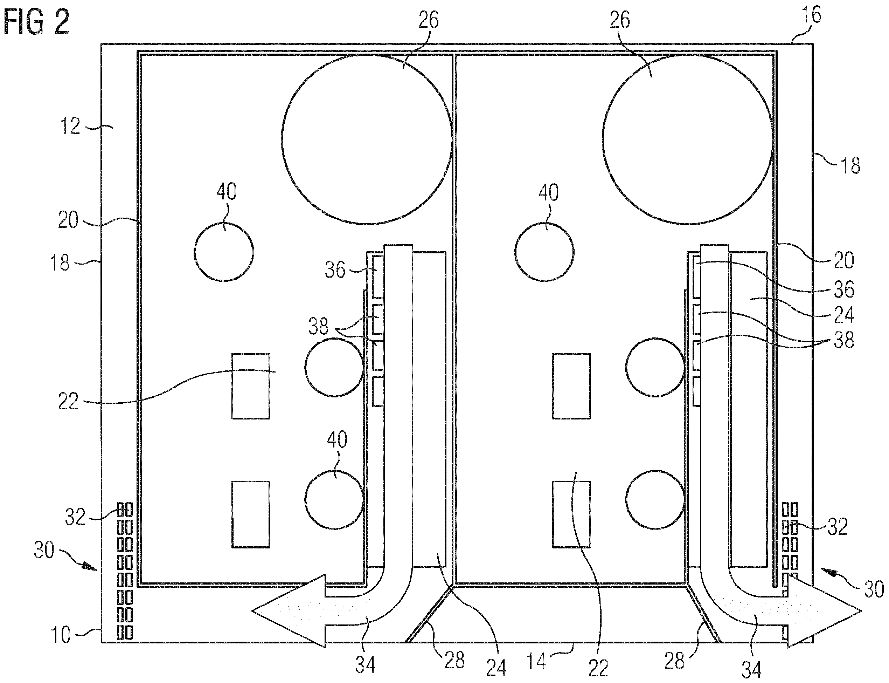

FIG 2 illustrates a schematic top view of the induction cooking hob according to the preferred embodiment of the present invention.

The induction cooking hob comprises the casing 10 including the bottom plate 12, the front wall 14, the rear wall 16 and the both lateral walls 18. The open top side of the casing 10 is covered by the panel, which is not shown in FIG 2. The both induction modules 20 are arranged side-by-side within the casing 10. The induction modules 20 are arranged close to the rear wall 16 of the casing 10. The induction modules 20 are spaced from the front wall 14 and the corresponding lateral wall 18 of the casing 10. The front channel is formed between the induction modules 20 and the front wall 14 of the casing 10. The both lateral channels are formed between the induction modules 20 and the corresponding lateral wall 18 of the casing 10.

The induction modules 20 include the circuitry 22, the cooling element 24 and the cooling fan 26 in each case. The circuitry 22 and the cooling element 24 are arranged side-by-side in the front portion of the induction module 20. The cooling fan 26 is arranged behind the cooling element 24. On the output side the circuitry 22 is electrically connected to the at least one induction coil. The induction coils are arranged above the induction modules 20 and beneath the panel. The induction coils are not shown in FIG 2. The circuitry 22 and the cooling element 24 are mechanically and thermally coupled to each other. Thus, heat is conducted from the circuitry 22 to the cooling element 24. The cooling element 24 is elongated and extends from the cooling fan 26 to the front channel.

The air guides 28 are formed as vertical sheet elements and arranged in the front channel between the induction modules 20 and the front walls 14. One of the air guides 28 corresponds with one of the induction modules 20. The air guides 28 are arranged diagonally relative to the cooling fins of the cooling element 24 and to the front channel. The air guide 28 is arranged in front of the corresponding cooling element 24.

The lateral outlet holes 30 are arranged in the front portions of the lateral walls 18. The lower outlet holes 32 are formed in the bottom plate 12 of the casing 10, wherein said lower outlet holes 32 are arranged in the front portions of the lateral channel between the induction module 20 and the adjacent lateral wall 18. Further, the lower outlet holes 32 are arranged beneath and beside the lateral outlet holes 30.

The cooling fan 26 is a radial cooling fan and generates the air stream 34. The cooling fan 26 sucks air in a rear portion of the casing 10 and blows the air stream 34 horizontally from the rear to the front. Said air stream 34 enters the cooling channels formed between the cooling fins of the cooling element 24. Within the cooling element 24 the air stream 34 flows from the rear to the front. After the air stream 34 has left the cooling element 24, the air guide 28 deflects the air stream 34. Then, the air stream 34 flows along the front channel and against the lateral wall 18 of the casing 10. On the left hand side of FIG 2, the air stream 34 flows from right to left within the corresponding front channel. In a similar way, the air stream 34 flows from left to right within the corresponding front channel on the right hand side of FIG 2. At last, the air stream 34 leaves the casing 10 through the lateral outlet holes 30 and lower outlet holes 32.

The cooling fan 26 is an active component, while the cooling element 24 is a passive component. The combination of the active cooling fan 26 and the passive cooling element 24 provides an efficient cooling effect, since the cooling fan 26 delivers a big amount of cooling air through the cooling element 24. The cooling air removes permanently heat from the rectifier 36 and the insulated-gate bipolar transistors 38.

In this example, the induction cooking hob comprises two induction modules 20. In general, the induction cooking hob according to the present invention comprises two or more induction modules 20. According to a further example, the induction cooking hob may comprise three or more induction modules 20 arranged side-by-side. The induction modules 20 allow the preparation of different induction cooking hobs.

The induction cooking hob according to the present invention avoids that the air stream provided for cooling purposes reaches the user. A protection shield at the induction cooking hob is not required. Since the induction modules 20 are spaced from the lateral outlet holes 30, it is not possible that the user touches the circuitry 22 through said lateral outlet holes 30.

Although an illustrative embodiment of the present invention has been described herein with reference to the accompanying drawings, it is to be understood that the present invention is not limited to that precise embodiment, and that various other changes and modifications may be affected therein by one skilled in the art without departing from the scope of the invention. All such changes and modifications are intended to be included within the scope of the invention as defined by the appended claims.

### List of reference numerals

- 10: casing
- 12: bottom plate
- 14: front wall
- 16: rear wall
- 18: lateral wall
- 20: induction module
- 22: circuitry
- 24: cooling element
- 26: cooling fan
- 28: air guide
- 30: outlet holes
- 32: outlet holes
- 34: air stream
- 36: rectifier
- 38: isolated-gate bipolar transistor (IGBT)
- 40: filter coil

## Claims

1. An induction cooking hob with a cooling system, wherein:
- the induction cooking hob comprises a casing (10) and at least one induction module (20), and
- the casing (10) includes at least one air guide (28) arranged inside a front channel, so that an air stream (34) from a cooling element (24) is deflected and guided to at least one lateral outlet hole (30) of a closest lateral wall (18),
- the casing (10) includes a bottom plate (12), a front wall (14), a rear wall (16) and two lateral walls (18),
- the at least one lateral outlet hole (30) is arranged in a front portion of the lateral wall (18), and
- each induction module (20) is arranged inside the casing (10),
**characterised in that**
the induction cooking hop comprises two induction modules (20) arranged side-by-side;
each induction module (20) is spaced from the front wall (14), so that the front channel is formed between the induction module (20) and the front wall (14);
wherein each induction module (20) includes a circuitry (22), a cooling element (24) and at least one cooling fan (26) ;
wherein a first air guide (28) is arranged in front of the cooling element (24) of the induction module (20) on a first side, while a second air guide (28) is arranged in front of the cooling element (24) of the induction module (20) on a second side, and wherein the first air guide (28) deflects the air stream (34) to the at least one lateral outlet hole (30) of the lateral wall (18) on the first side, while the right air guide (28) deflects the air stream (34) to the at least one lateral outlet hole (30) of the lateral wall (18) on the second side.

2. The induction cooking hob according to claim 1,
**characterised in that**
the circuitry (22) and the cooling element (24) are arranged side-by-side in a front portion of the induction module (20), wherein at least some components (36, 38) of the circuitry (22) are arranged on the cooling element (24), and wherein preferably at least one rectifier (36) and/or at least one power unit (38) are arranged on said cooling element (24).

3. The induction cooking hob according to any of the preceding claims,
**characterised in that**
the cooling fan (26) is arranged in a rear portion of the induction module (20) and behind the cooling element (24).

4. The induction cooking hob according to any of the preceding claims,
**characterised in that**
the cooling element (24) includes a structure that an air stream (34) generated by the cooling fan (26) penetrates or passes said cooling element (24) and reaches the front channel.

5. The induction cooking hob according to any of the preceding claims,
**characterised in that**
at least one of the lateral walls (18) includes a plurality of lateral outlet holes (30) arranged in the front portion of said lateral wall (18).

6. The induction cooking hob according to any one of the preceding claims,
**characterised in that**
the air guide (28) is formed as a vertical sheet element, wherein preferably said air guide (28) is made of metal and/or plastics.

7. The induction cooking hob according to any one of the preceding claims,
**characterised in that**
the air guide (28) is formed as a plane sheet element arranged diagonally inside the front channel and in front of the cooling element (24).

8. The induction cooking hob according to any of the preceding claims,
**characterised in that**
the bottom plate (12) includes at least one lower outlet hole (32) arranged in an outer portion of the front channel, wherein said outer portion is beside the corresponding lateral wall (18), and wherein preferably a plurality of lower outlet holes (32) is arranged in said outer portion of the front channel.

9. The induction cooking hob according to any of the preceding claims,
**characterised in that**
the induction module (20) is spaced from the closest lateral wall (18), so that a lateral channel is formed between the induction module (20) and said closest lateral wall (18), wherein preferably the bottom plate (12) includes at least one lower outlet hole (32) arranged in a front portion of the lateral channel, wherein preferably a plurality of lower outlet holes (32) is arranged in said front portion of the lateral channel.

10. The induction cooking hob according to any of the preceding claims,
**characterised in that**
the cooling element (24) includes a plurality of cooling fins arranged plane-parallel to each other, wherein a plurality of elongated cooling channels is arranged between said cooling fins, and wherein said elongated cooling channels extend parallel to a connecting line between the cooling fan (26) and the air guide (28), and wherein preferably the cooling fins extend vertically downwards, so that the elongated cooling channels are formed between the cooling fins and the bottom plate (12) of the casing (10).

11. The induction cooking hob according to any of the preceding claims,
**characterised in that**
the cooling fan (26) is a radial cooling fan and blows the air stream (34) from the rear to the front, wherein preferably the cooling fan (26) sucks the air at the rear side of the induction cooking hob.

12. The induction cooking hob according to any one of the preceding claims,
**characterised in that**
the induction module (20) on the first side is spaced from the lateral wall (18) on the first side, while the induction module (20) on the second side is spaced from the lateral wall (18) on the second side, so that a first and a second lateral channel is formed between the corresponding induction modules (20) and lateral walls (18).

13. The induction cooking hob according to any one of the preceding claims,
**characterised in that**
the induction cooking hob comprises a panel, in particular a glass ceramic panel, covering an open top side of the casing (10), wherein the induction cooking hob comprises at least one induction coil, in particular a plurality of induction coils, electrically connected to the corresponding circuitry (22), and wherein preferably the at least one induction coil is arranged between the at least one induction module (20) and the panel.

## Patentansprüche

1. Induktionskochfeld mit Kühlsystem, wobei:
- das Induktionskochfeld ein Gehäuse (10) und mindestens ein Induktionsmodul (20) umfasst und
- das Gehäuse (10) mindestens eine Luftführung (28) umfasst, die innerhalb eines vorderen Kanals angeordnet ist, sodass ein Luftstrom (34) von einem Kühlelement (24) abgelenkt und zu mindestens einer seitlichen Auslassbohrung (30) der nächsten Seitenwand (18) geführt wird,
- das Gehäuse (10) eine Bodenplatte (12) eine Vorderwand (14), eine Rückwand (16) und zwei Seitenwände (18) umfasst,
- die mindestens eine seitliche Auslassbohrung (30) in einem vorderen Abschnitt der Seitenwand (18) angeordnet ist, und
- jedes Induktionsmodul (20) in dem Gehäuse (10) angeordnet ist,
**dadurch gekennzeichnet, dass**
das Induktionskochfeld zwei Induktionsmodule (20) umfasst, die nebeneinander angeordnet sind;
jedes Induktionsmodul (20) von der Vorderwand (14) beabstandet ist, sodass der vordere Kanal zwischen dem Induktionsmodul (20) und der Vorderwand (14) ausgebildet ist;
wobei jedes Induktionsmodul (20) einen Schaltkreis (22), ein Kühlelement (24) und mindestens ein Kühlgebläse (26) umfasst;
wobei eine erste Luftführung (28) vor dem Kühlelement (24) des Induktionsmoduls (20) auf einer ersten Seite angeordnet ist, während eine zweite Luftführung (28) vor dem Kühlelement (24) des Induktionsmoduls (20) auf einer zweiten Seite angeordnet ist und wobei die erste Luftführung (28) den Luftstrom (34) zu der mindestens einen seitlichen Auslassbohrung (30) der Seitenwand (18) auf der ersten Seite ablenkt, während die rechte Luftführung (28) den Luftstrom (34) zu der mindestens einen seitlichen Auslassbohrung (30) der Seitenwand (18) auf der zweiten Seite ablenkt.

2. Induktionskochfeld nach Anspruch 1,
**dadurch gekennzeichnet, dass**
der Schaltkreis (22) und das Kühlelement (24) nebeneinander in einem vorderen Abschnitt des Induktionsmoduls (20) angeordnet sind, wobei zumindest einige Komponenten (36, 38) des Schaltkreises (22) am Kühlelement (24) angeordnet sind und wobei vorzugsweise mindestens ein Gleichrichter (36) und/oder mindestens eine Antriebseinheit (38) an dem Kühlelement (24) angeordnet sind.

3. Induktionskochfeld nach einem der vorhergehenden Ansprüche,
**dadurch gekennzeichnet, dass**
das Kühlgebläse (26) in einem hinteren Abschnitt des Induktionsmoduls (20) und hinter dem Kühlelement (24) angeordnet ist.

4. Induktionskochfeld nach einem der vorhergehenden Ansprüche,
**dadurch gekennzeichnet, dass**
das Kühlelement (24) eine Struktur umfasst, sodass ein durch das Kühlgebläse (26) erzeugter Luftstrom (34) das Kühlelement (24) durchdringt oder passiert und den vorderen Kanal erreicht.

5. Induktionskochfeld nach einem der vorhergehenden Ansprüche,
**dadurch gekennzeichnet, dass**
mindestens eine der Seitenwände (18) mehrere seitliche Auslassbohrungen (30) umfasst, die im vorderen Abschnitt der Seitenwand (18) angeordnet sind.

6. Induktionskochfeld nach einem der vorhergehenden Ansprüche,
**dadurch gekennzeichnet, dass**
die Luftführung (28) als vertikales Blechelement ausgebildet ist, wobei die Luftführung (28) vorzugsweise aus Metall und/oder Kunststoff besteht.

7. Induktionskochfeld nach einem der vorhergehenden Ansprüche,
**dadurch gekennzeichnet, dass**
die Luftführung (28) als ebenes Blechelement ausgebildet ist, das diagonal in dem vorderen Kanal und vor dem Kühlelement (24) angeordnet ist.

8. Induktionskochfeld nach einem der vorhergehenden Ansprüche,
**dadurch gekennzeichnet, dass**
die Bodenplatte (12) mindestens eine untere Auslassbohrung (32) umfasst, die in einem äußeren Abschnitt des vorderen Kanals angeordnet ist, wobei der äußere Abschnitt neben der zugehörigen Seitenwand (18) angeordnet ist und wobei vorzugsweise mehrere untere Auslassbohrungen (32) in dem äußeren Abschnitt des vorderen Kanals angeordnet sind.

9. Induktionskochfeld nach einem der vorhergehenden Ansprüche,
**dadurch gekennzeichnet, dass**
das Induktionsmodul (20) von der nächsten Seitenwand (18) beabstandet ist, sodass ein seitlicher Kanal zwischen dem Induktionsmodul (20) und der nächsten Seitenwand (18) ausgebildet ist, wobei vorzugsweise die Bodenplatte (12) mindestens eine untere Auslassbohrung (32) umfasst, die in einem vorderen Abschnitt des seitlichen Kanals angeordnet ist, wobei vorzugsweise mehrere untere Auslassbohrungen (32) in dem vorderen Abschnitt des seitlichen Kanals angeordnet sind.

10. Induktionskochfeld nach einem der vorhergehenden Ansprüche,
**dadurch gekennzeichnet, dass**
das Kühlelement (24) mehrere Kühllamellen umfasst, die planparallel zueinander angeordnet sind, wobei mehrere längliche Kühlkanäle zwischen den Kühllamellen angeordnet sind und wobei sich die länglichen Kühlkanäle parallel zu einer Verbindungslinie zwischen dem Kühlgebläse (26) und der Luftführung (28) erstrecken und wobei sich die Kühllamellen vorzugsweise vertikal abwärts erstrecken, sodass die länglichen Kühlkanäle zwischen den Kühllamellen und der Bodenplatte (12) des Gehäuses (10) ausgebildet sind.

11. Induktionskochfeld nach einem der vorhergehenden Ansprüche,
**dadurch gekennzeichnet, dass**
das Kühlgebläse (26) ein radiales Kühlgebläse ist und den Luftstrom (34) von hinten nach vorn bläst, wobei vorzugsweise das Kühlgebläse (26) die Luft an der Rückseite des Induktionskochfelds ansaugt.

12. Induktionskochfeld nach einem der vorhergehenden Ansprüche,
**dadurch gekennzeichnet, dass**
das Induktionsmodul (20) auf der ersten Seite von der Seitenwand (18) auf der ersten Seite beabstandet ist, während das Induktionsmodul (20) auf der zweiten Seite von der Seitenwand (18) auf der zweiten Seite beabstandet ist, sodass ein erster und zweiter seitlicher Kanal zwischen den entsprechenden Induktionsmodulen (20) und Seitenwänden (18) ausgebildet sind.

13. Induktionskochfeld nach einem der vorhergehenden Ansprüche,
**dadurch gekennzeichnet, dass**
das Induktionskochfeld ein Paneel, insbesondere ein Glaskeramikpaneel, umfasst, das eine offene Oberseite des Gehäuses (10) bedeckt, wobei das Induktionskochfeld mindestens eine Induktionsspule, insbesondere mehrere Induktionsspulen, umfasst, die mit dem zugehörigen Schaltkreis (22) verbunden sind, und wobei vorzugsweise die mindestens eine Induktionsspule zwischen dem mindestens einen Induktionsmodul (20) und dem Paneel angeordnet ist.

## Revendications

1. Table de cuisson par induction avec un système de refroidissement, dans laquelle :
- la table de cuisson par induction comprend un boîtier (10) et au moins un module d'induction (20), et
- le boîtier (10) comprend au moins un guide d'air (28) disposé à l'intérieur d'un canal avant, de telle sorte qu'un flux d'air (34) provenant d'un élément de refroidissement (24) est dévié et guidé vers au moins un orifice de sortie latéral (30) d'une paroi latérale la plus proche (18),
- le boîtier (10) comprend une plaque inférieure (12), une paroi avant (14), une paroi arrière (16) et deux parois latérales (18),
- l'au moins un orifice de sortie latéral (30) est disposé dans une partie avant de la paroi latérale (18), et
- chaque module d'induction (20) est placé à l'intérieur du boîtier (10),
**caractérisée en ce que**
la table de cuisson par induction comprend deux modules d'induction (20) disposés côte à côte ;
chaque module d'induction (20) est espacé de la paroi avant (14), de telle sorte que le canal avant est formé entre le module d'induction (20) et la paroi avant (14) ; dans laquelle chaque module d'induction (20) comprend un circuit (22), un élément de refroidissement (24) et au moins un ventilateur de refroidissement (26) ;
dans laquelle un premier guide d'air (28) est disposé devant l'élément de refroidissement (24) du module d'induction (20) sur un premier côté, tandis qu'un second guide d'air (28) est disposé devant l'élément de refroidissement (24) du module d'induction (20) sur un second côté, et dans laquelle le premier guide d'air (28) dévie le flux d'air (34) vers au moins un orifice de sortie latéral (30) de la paroi latérale (18) sur le premier côté, tandis que le guide d'air droit (28) dévie le flux d'air (34) vers au moins un orifice de sortie latéral (30) de la paroi latérale (18) sur le second côté.

2. Table de cuisson par induction selon la revendication 1,
**caractérisée en ce que**
le circuit (22) et l'élément de refroidissement (24) sont disposés côte à côte dans une partie avant du module d'induction (20), dans laquelle au moins certains composants (36, 38) du circuit (22) sont disposés sur l'élément de refroidissement (24), et dans laquelle, de préférence, au moins un redresseur (36) et/ou au moins une unité de puissance (38) sont disposés sur ledit élément de refroidissement (24).

3. Table de cuisson par induction selon l'une quelconque des revendications précédentes,
**caractérisée en ce que**
le ventilateur de refroidissement (26) est disposé dans une partie arrière du module d'induction (20) et derrière l'élément de refroidissement (24).

4. Table de cuisson par induction selon l'une quelconque des revendications précédentes,
**caractérisée en ce que**
l'élément de refroidissement (24) comprend une structure permettant à un flux d'air (34) généré par le ventilateur de refroidissement (26) de pénétrer dans ou de traverser ledit élément de refroidissement (24) et d'atteindre le canal avant.

5. Table de cuisson par induction selon l'une quelconque des revendications précédentes,
**caractérisée en ce que**
au moins l'une des parois latérales (18) comprend une pluralité d'orifices de sortie latéraux (30) disposés dans la partie avant de ladite paroi latérale (18).

6. Table de cuisson par induction selon l'une quelconque des revendications précédentes,
**caractérisée en ce que**
le guide d'air (28) est formé en tant qu'un élément en feuille vertical, dans lequel, de préférence, ledit guide d'air (28) est fait de métal et/ou de plastique.

7. Table de cuisson par induction selon l'une quelconque des revendications précédentes,
**caractérisée en ce que**
le guide d'air (28) est formé en tant qu'un élément en feuille plat disposé en diagonale à l'intérieur du canal avant et devant l'élément de refroidissement (24).

8. Table de cuisson par induction selon l'une quelconque des revendications précédentes,
**caractérisée en ce que**
la plaque inférieure (12) comprend au moins un orifice de sortie inférieur (32) disposé dans une partie extérieure du canal avant, cette partie extérieure se trouvant à côté de la paroi latérale correspondante (18), et de préférence une pluralité d'orifices de sortie inférieurs (32) étant disposés dans cette partie extérieure du canal avant.

9. Table de cuisson par induction selon l'une quelconque des revendications précédentes,
**caractérisée en ce que**
le module d'induction (20) est espacé de la paroi latérale la plus proche (18), de telle sorte qu'un canal latéral est formé entre le module d'induction (20) et ladite paroi latérale la plus proche (18), dans laquelle, de préférence, la plaque inférieure (12) comprend au moins un orifice de sortie inférieur (32) disposé dans une partie avant du canal latéral, dans laquelle, de préférence, une pluralité d'orifices de sortie inférieurs (32) est disposée dans ladite partie avant du canal latéral.

10. Table de cuisson par induction selon l'une quelconque des revendications précédentes,
**caractérisée en ce que**
l'élément de refroidissement (24) comprend une pluralité d'ailettes de refroidissement disposées de manière plane et parallèle les unes aux autres, dans laquelle une pluralité de canaux de refroidissement allongés est disposée entre ces ailettes de refroidissement, et dans laquelle ces canaux de refroidissement allongés s'étendent parallèlement à une ligne de connexion entre le ventilateur de refroidissement (26) et le guide d'air (28), et dans laquelle, de préférence, les ailettes de refroidissement s'étendent verticalement vers le bas, de telle sorte que les canaux de refroidissement allongés sont formés entre les ailettes de refroidissement et la plaque inférieure (12) du boîtier (10).

11. Table de cuisson par induction selon l'une quelconque des revendications précédentes,
**caractérisée en ce que**
le ventilateur de refroidissement (26) est un ventilateur de refroidissement radial et souffle le flux d'air (34) de l'arrière vers l'avant, le ventilateur de refroidissement (26) aspirant de préférence l'air au niveau du côté arrière de la table de cuisson par induction.

12. Table de cuisson par induction selon l'une quelconque des revendications précédentes,
**caractérisée en ce que**
le module d'induction (20) sur le premier côté est éloigné de la paroi latérale (18) sur le premier côté, tandis que le module d'induction (20) sur le second côté est éloigné de la paroi latérale (18) sur le second côté, de telle sorte qu'un premier et un second canal latéral sont formés entre les modules d'induction (20) et les parois latérales (18) correspondants.

13. Table de cuisson par induction selon l'une quelconque des revendications précédentes,
**caractérisée en ce que**
la table de cuisson par induction comprend un panneau, en particulier un panneau en vitrocéramique, recouvrant un côté supérieur ouvert du boîtier (10), la table de cuisson par induction comprenant au moins une bobine d'induction, en particulier plusieurs bobines d'induction, connectées électriquement au circuit correspondant (22), et dans laquelle, de préférence, l'au moins une bobine d'induction est disposée entre l'au moins un module d'induction (20) et le panneau.
